# EUROPÄISCHE PATENTSCHRIFT

(11) **EP 1 418 206 B1**
(45) Veröffentlichungstag und Bekanntmachung des Hinweises auf die Patenterteilung: **13.10.2004**
(21) Anmeldenummer: 02023426.6
(22) Anmeldetag: 19.10.2002
(51) Int. Cl.: C08L 63/00, C08G 59/18, C08G 59/42

(54) **Härtbare Epoxidharzzusammensetzung**
Curable Epoxy Resin Composition
Composition de resine Epoxy reticulable

(43) Veröffentlichungstag der Anmeldung: 12.05.2004
(73) Patentinhaber: LEUNA-Harze GmbH, 06233 Leuna (DE)
(72) Erfinder: Geyer, Udo, 06667 Weissenfels (DE); Henning, Holger, Dr., 06246 Bad Lauchstädt (DE)
(74) Vertreter: Wablat, Wolfgang, Dr. Dr.

(56) Entgegenhaltungen:
- EP-A- 0 452 265
- WO-A-00/76764
- WO-A-98/18845
- WO-A-98/31750

## Beschreibung

Die Erfindung betrifft eine härtbare Epoxidharzzusammensetzung in Form eines Einkomponentensystems, die sich über die Stufe der Prepregs zu hochtemperaturbeständigen Laminaten mit ausgezeichneten mechanischen, thermischen, dielektrischen und chemischen Eigenschaften verarbeiten lässt..

Mit Prepregs bezeichnet man Fasermaterialien, die beispielsweise aus Glasfasern bestehen und mit wärmehärtbaren Harzen getränkt sind, die später durch Wärmepressen zu Formteilen oder Halbzeugen weiter verarbeitet werden.

Die Härtung von Epoxidharzen mit Maleinsäureanhydrid-Copolymeren ist bekannt (F, LOHSE, Houben Weyl, Methoden der Organischen Chemie, Bd. E 20 Makromolekulare Stoffe; Thieme, Stuttgart 1987).

Bekannt ist auch, bromierte Epoxidharze in Lösung mit Maleinsäureanhydrid-Styren-Copolymeren und zweiwertigen Phenolen und bekannten Beschleunigern zusammen mit Verstärkungsmaterialien zu hochwertigen Laminaten zu verarbeiten (WO 98/18845; WP 98/31750).

Flexibilisierende Eigenschaften werden dabei durch Zusätze von Phenoxyharzen erreicht (WO 0076764).

Alle diese Systeme haben den Nachteil, dass sie beim Laminator formuliert werden, z.B. über die Stufe der Zweikomponentensysteme. Dabei wird eine Epoxidharzlösung in Stickstoffatmosphäre hergestellt durch Erhitzen des Diglycidylethers von Bisphenol A, des Diglycidylethers von Tetrabrombisphenol A und von Tetrabrombisphenol A unter Rühren bei 130 °C für eine Stunde bis zur Herstellung einer homogenen Mischung. Anschließend wird die Mischung auf 120 °C abgekühlt, die gewünschte Menge Propylenglykolmonomethyletheracetat zudosiert und unter Rühren weiter abgekühlt auf 85 °C, man dosiert die erforderliche Menge Methylethylketon dazu und kühlt weiter auf 23 °C ab.

Nun stellt man als zweite Komponente die Härterlösung her durch Erhitzen des Lösungsmittels Methylethylketon unter Stickstoff auf 70 °C und Zugabe von festem Maleinsäureanhydrid-Styren-Copolymeren, bis sich alles gelöst hat. Die zwei separaten Lösungen werden addiert und jetzt wie das Einkomponentensystem mit den Beschleunigern bei Raumtemperatur für 30 Minuten homogenisiert und analog weiterverarbeitet.

Es ist leicht zu erkennen, dass der gegenwärtige Stand der Technik beim Laminator nicht nur einen sehr hohen Arbeitsaufwand durch zeitaufwendige Formulierungsarbeiten erfordert, sondem auch einen hohen apparativen Aufwand verbunden mit zusätzlichen Dosiereinrichtungen, Tank- und Lagerkapazitäten. Daher stellen Einkomponentensysteme die wirtschaftlichere Variante dar.

Das Ziel der Erfindung war es deshalb, Epoxidharzzusammensetzungen als Einkomponentensysteme mit hoher Lagerstabilität zu entwickeln, die sich zusammen mit Verstärkungsmaterialien bei Temperaturen über 100 °C über die Stufe der Prepregs zu gegebenenfalls selbstverlöschenden und kupferkaschierten Laminaten mit ausgezeichneten mechanischen, thermischen, dielektrischen und chemischen Eigenschaften verarbeiten lassen.

Diese bestehen erfindungsgemäß aus
- 20 Masse% bis 75 Masse% niedermolekularen Epoxidharzen auf Basis
   . Bisphenol A mit Epoxidäquivalentgewichten von 170 bis 200 g/Äqu und/oder
   . Bisphenol F mit Epoxidäquivalentgewichten von 156 bis 200 g/Äqu und/oder
   . Tetrabrombisphenol A mit Epoxidäquivalentgewichten von 330 bis 500 g/Äqu und/oder
   . Tetraphenolethan mit Epoxidäquivalentgewichten von 156 bis 260 g/Äqu
   . mit einem Gesamtgehalt an α-Glykolgruppen von 0,03 bis 0,12 Äqu/kg Gesamtharz,
   bezogen auf den Gesamtfeststoff,
- 10 Masse% bis 75 Masse% Maleinsäureanhydrid-Styren-Copolymeren mit einem durchschnittlichen Molekulargewicht von 1.400 bis 50000, bezogen auf den Gesamtfeststoff, und ggfs.
- (0 Masse%) bis 50 Masse% mehrwertigen Phenolen, bezogen auf den Gesamtfeststoff, die ggfs. mit den o.g. Epoxidharzen schon teilweise oder vollständig vorreagiert sein können,
- gelöst in organischen Lösungsmitteln.

Besonders geeignet sind Epoxidharzzusammensetzungen, wobei die niedermolekularen Epoxidharze Epoxidäquivalentgewichte bei
Bisphenol A von 180 bis 190 g/Äqu,
Bisphenol F von 164 bis 172 g/Äqu,
Tetrabrombisphenol A von 330 bis 480 g/Äqu und
Tetraphenolethan von 190 bis 240 g/Äqu
aufweisen.

Die im Einkomponentensystem eingesetzten Maleinsäureanhydrid-Styren-Copolymeren haben zweckmäßig ein durchschnittliches Molekulargewicht von Mw = 5000 bis 12000 und sind durchschnittlich im Verhältnis Maleinsäureanhydrid : Styren = 1 : 1 bis 1 : 6 copolymerisiert.

Gegebenenfalls werden der Formulierung zusätzlich mehrwertige phenolische Verbindungen wie Bisphenol A und/oder Bisphenol F und/oder Phenolnovolak und/oder Kresolnovolak und/oder Tetrabrombisphenol A und gegebenenfalls Tetraphenolethan zugesetzt.

Die erfindungsgemäß als Einkomponentensystem entwickelten Zusammensetzungen sind gelöst in gängigen Lösungsmitteln wie Ketonen (Methylethylketon, Aceton, Cyclohexanon), Estern (Butylacetat, Propylenglykolmonomethyletheracetat), aromatischen Kohlenwasserstoffen (Toluen, Xylen), Dimethylformamid oder Mischungen derselben. Die Konzentration der Lösungen ist unterschiedlich und beträgt je nach Zusammensetzung 50 bis 80 Masse%.

Zur Beschleunigung der Härtungsreaktion werden bekannte Verbindungen wie tertiäre Amine, Imidazol und seine Derivate, Oniumsalze, organische Säuren, anorganische Säuren oder deren Mischungen eingesetzt.

Als Verstärkungsmaterialien dienen Fasern, Filze, Vliese, Gewebe, Matten aus Glas, Carbon, Aramid, nachwachsenden Naturstoffen wie Baumwolle, Hanf, Flachs, Jute oder deren Hybride.

Die Tränkung der Verstärkungsmaterialien erfolgt analog klassischen FR 4-Systemen in Tränkwannen von handelsüblichen Lackieranlagen mit anschließender Trocknung in vorzugsweise vertikalen Trockenschächten zu Prepregs, die analog klassischen FR 4-Prepregs zu gegebenenfalls ein- bzw. beidseitig kupferkaschierten Laminaten in vorzugsweise Mehretagenpressen bei Temperaturen von 170 bis 200 °C verpresst werden. Presstemperaturen von 200°C führen zu höheren Glasübergangstemperaturen.

### Ausführungsbeispiele

### Beispiel 1 (Einkomponentensystem)

1100 g eines Maleinsäureanhydrid-Styren-Copolymeren mit einem Molekulargewicht Mw = 7200 und einer Säurezahl von 279 mg KOH/g, 100 g Bisphenol A, 300 g eines Bisphenol A-Epoxidharzes mit einem Epoxidäquivalentgewicht von 182 g/Äqu und einem Gehalt an α-Glykolgruppen von 0,05 Äqu/kg Harz, 270 g eines Bisphenol F-Epoxidharzes mit einem Epoxidäquivalentgewicht von 166 g/Äqu und einem Gehalt an α-Glykolgruppen von 0,06 Äqu/kg Harz, 300 g Methylethylketon und 880 g Propylenglykolmonomethyletheracetat werden durch zweistündiges Rühren zu einem Einkomponentensystem formuliert. Der Feststoffgehalt beträgt 60 %, die Viskosität bei 25 °C 563 mPa s.

### Beispiel 2 (Vergleichsbeispiel mit Zweikomponentensystem)

### 1. Harzkomponente

300 g eines Bisphenol A-Epoxidharzes mit einem Epoxidäquivalentgewicht von 183 g/Äqu und einem Gehalt an α-Glykolgruppen von 2,4 Äqu/kg Harz und 270 g eines Bisphenol F-Epoxidharzes mit einem Epoxidharzgewicht von 166 g/Äqu. und einem Gehalt an α-Glykolgruppen von 2,5 Äqu/kg Harz werden in 80 g Methylethylketon zu einer 87,7%igen Harzlösung formuliert.

### 2. Härterkomponente

1100 g eines Maleinsäureanhydrid-Styren-Copolymeren mit einem Molekulargewicht Mw = 7200 und einer Säurezahl von 279 mg KOH/g und 100 g Bisphenol A werden in 880 g Propylenglykolmonomethyletheracetat und 220 g Methylethylketon zu einer 52%igen Härterlösung formuliert.

Die Harz- und die Härterkomponente werden durch inniges Vermischen zu einer homogenen unbeschleunigten Lösung formuliert mit einem Feststoffgehalt von 60 % und einer Viskosität bei 25 °C von 572 mPa s.

### Beispiel 3 (Einkomponentensystem)

2075 g eines Maleinsäureanhydrid-Styren-Copolymeren mit einem Molekulargewicht Mw = 7200 und einer Säurezahl von 279 mg KOH/g, 810 g Tetrabrombisphenol A, 965 g eines Tetrabrombisphenol A-Epoxidharzes mit einem Epoxidäquivalentgewicht von 341 g/Äqu und einem Gehalt von 0,03 Äqu/kg Harz an α-Glykolgruppen und 1100 g eines Bisphenol A-Epoxidharzes mit einem Epoxidäquivalentgewicht von 182 g/Äqu und einem Gehalt an α-Glykolgruppen von 0,05 Äqu/kg Harz werden zusammen mit 265 g Toluen, 1700 g Propylenglykolmonomethyletheracetat und 700 g Methylethylketon zu einem Einkomponentensystem formuliert mit einem Feststoffgehalt von 65 % und einer Viskosität bei 25 °C von 505 mPa s.

### Beispiel 4 (Vergleichsbeispiel 2 mit Zweikomponentensystem)

### 1. Harzkomponente

965 g eines Tetrabrombisphenol A-Epoxidharzes mit einem Epoxidäquivalentgewicht von 349 g/Äqu und einem Gehalt von 2,3 Äqu/kg Harz an α-Glykolgruppen, 1100 g Bisphenol A-Epoxidharz mit einem Epoxidäquivalentgewicht von 183 g/Äqu und einem Gehalt an α-Glykolgruppen von 2,5 Äqu/kg Harz werden in 265 g Toluen und 175 g Methylethylketon zu einer 77,5%igen Harzlösung formuliert.

### 2. Härterkomponente

2075 g eines Maleinsäureanhydrid-Styren-Copolymeren mit einem Molekulargewicht Mw = 7200 und einer Säurezahl von 279 mg KOH/g und 810 g Tetrabrombisphenol A werden in 1700 g Propylenglykolmonomethyletheracetat und 325 g Methylethylketon zu einer 58,8%igen Harzlösung formuliert.

Die Harz- und Härterkomponente werden durch inniges Vermischen zu einer Lösung formuliert mit einem Feststoffgehalt von 65 % und einer Viskosität bei 25 °C von 505 mPa s.

**Tabelle 1:**

| **Lagerstabilität der unbeschleunigten Lackierlösungen bei Raumtemperatur** | | | | |
|---|---|---|---|---|
| | **Beispiel 1** | **Beispiel 2** **(Vergleich)** | **Beispiel 3** | **Beispiel 4** **(Vergleich)** |
| Viskosität bei 25 °C (mPa s) /Änderung in % | 563/ 0 | 572/ 0 | 505/ 0 | 512/ 0 |
| | | | | |
| nach 1 Monat | 563/ 0 | 599/ 4,7 | 506/ 0,2 | 536/ 4,7 |
| nach 2 Monaten | 565/ 0,4 | 650/ 13,6 | 506/ 0,2 | 584/ 14,1 |
| nach 3 Monaten | 568/ 0,9 | 732/ 28 | 508/ 0,6 | 664/ 29,7 |
| nach 4 Monaten | 568/ 0,9 | 810/ 41,6 | 510/ 1 | 735/ 43,6 |
| nach 5 Monaten | 569/ 1 | 902/ 57,7 | 511/ 1,2 | 822/ 60,5 |
| nach 6 Monaten | 572/ 1,6 | 1040/ 81,8 | 512/ 1,4 | 914/ 78,5 |
| | | | | |
| Gesamtgehalt an α-Glykolgruppen der eingesetzten Harze (Äqu/kg) | 0,05 | 2,5 | 0,04 | 2,4 |

Aus Tabelle 1 erkennt man, dass bei den Beispielen 1 und 3 mit den erfindungsgemäß eingesetzten niedermolekularen Epoxidharzen mit geringem Gehalt an α-Glykolgruppen eine sehr gute Lagerstabilität vorhanden ist, da sich die Viskosität der Lösung nicht oder nur unwesentlich erhöht.

Die Herstellung und die Handhabung von Einkomponentensytemen für die o.g. Epoxidharz/Härtersysteme werden dadurch erst ermöglicht und führen zu den bereits genannten Vorteilen beim Hersteller und Laminator.

Jeweils 1000 kg Harzlösung der in Tabelle 1 genannten Beispiele 1 und 3 werden nach einer Lagerzeit von 6 Monaten zusammen mit 2,25 kg einer 10%igen 2-Methylimidazollösung in Methylethylketon analog klassischen FR 4-Harzen nach dem Stand der Technik verarbeitet. Im Falle des Beispiel 1 erhält man ein Laminat nach NEMA Ll1 Qualität G 11, im Falle des Beispiels 3 ein Laminat Qualität FR 4.

## Patentansprüche

1. Härtbare Epoxidharzzusammensetzung in Form eines Einkomponentensystems, bestehend aus
- 20 Masse% bis 75 Masse% niedermolekularen Epoxidharzen auf Basis
. Bisphenol A mit Epoxidäquivalentgewichten von 170 bis 200 g/Äqu und/oder
. Bisphenol F mit Epoxidäquivalentgewichten von 156 bis 200 g/Äqu und/oder
. Tetrabrombisphenol A mit Epoxidäquivalentgewichten von 330 bis 500 g/Äqu und/oder
. Tetraphenolethan mit Epoxidäquivalentgewichten von 156 bis 260 g/Äqu
. mit einem Gesamtgehalt an α-Glykolgruppen von 0,03 bis 0,12 Äqu/kg Gesamtharz,
bezogen auf den Gesamtfeststoff
- 10 Masse% bis 75 Masse% Maleinsäureanhydrid-Styren-Copolymeren, mit einem durchschnittlichen Molekulargewicht von 1.400 bis 50000 bezogen auf den Gesamtfeststoff, und ggfs.
- (0 Masse%) bis 50 Masse% mehrwertigen Phenolen, bezogen auf den Gesamtfeststoff, die ggfs. mit den o.g. Epoxidharzen schon teilweise oder vollständig vorreagiert sein können,
- gelöst in organischen Lösungsmitteln.

2. Härtbare Epoxidharzzusammensetzung in Form eines Einkomponentensystems nach Anspruch 1, **dadurch gekennzeichnet, dass** die niedermolekularen Epoxidharze Epoxidäquivalentgewichte bei
Bisphenol A von 180 bis 190 g/Äqu,
Bisphenol F von 164 bis 172 g/Äqu,
Tetrabrombisphenol A von 330 bis 480 g/Äqu und
Tetraphenolethan von 190 bis 240 g/Äqu
aufweisen.

3. Härtbare Epoxidharzzusammensetzung in Form eines Einkomponentensystems nach Anspruch 1 oder Anspruch 2, **dadurch gekennzeichnet, dass** die Maleinsäureanhydrid-Styren-Copolymeren ein durchschnittliches Molekulargewicht von 5000 bis 12000 haben und im Verhältnis Maleinsäureanhydrid : Styren zwischen 1 : 1 bis 1 : 6 copolymerisiert wurden.

4. Härtbare Epoxidharzzusammensetzung in Form eines Einkomponentensystems nach einem oder mehreren der Ansprüche 1 bis 3, **dadurch gekennzeichnet, dass** als zusätzlich eingesetzte mehrwertige Phenole Bisphenol A und/oder Bisphenol F und/oder Phenolnovolak und/oder Kresolnovolak und/oder Tetrabrombisphenol A und ggfs. Tetraphenolethan verwendet werden.

5. Härtbare Epoxidharzzusammensetzung in Form eines Einkomponentensystems nach einem oder mehreren der Ansprüche 1 bis 4, **dadurch gekennzeichnet, dass** als organische Lösungsmittel Aceton und/oder Methylethylketon und/oder Propylenglykolmonomethyletheracetat eingesetzt werden.

## Claims

1. A hardening epoxy resin composition in the form of a one-component system, consisting of
- 20 to 75 percent by weight of low-molecular epoxy resins based on
- bisphenol A with epoxy equivalent weights from 170 to 200 g/eq,
- bisphenol F with epoxy equivalent weights from 156 to 200 g/eq,
- tetrabromobisphenol A with epoxy equivalent weights from 330 to 500 g/eq,
- tetraphenolethane with epoxy equivalent weights from 156 to 260 g/eq,
- and a total α-glycol group content of 0.03 to 0.12 eq per kg of whole resin,
in relation to the whole solid;
- 10 to 75 percent by weight of maleic acid anhydride-styrene copolymers with an average molecular weight of 1,400 to 50,000 in relation to the whole solid, and, optionally,
- 0 to 50 percent by weight of polyvalent phenols in relation to the whole solid that may optionally be fully or partially prereacted with the epoxy resins,
- dissolved in organic solvents.

2. The hardening epoxy resin composition in the form of a one-component system according to claim 1, **characterized in that** the low-molecular epoxy resins have epoxy equivalent weights as follows:
bisphenol A from 180 to 190 g/eq,
bisphenol F from 164 to 172 g/eq,
tetrabromobisphenol A from 330 to 480 g/eq,
tetraphenolethane from 190 to 240 g/eq.

3. The thermosetting epoxy resin composition in the form of a one-component system according to claims 1 or 2, **characterized in that** the maleic acid anhydride-styrene copolymers have an average molecular weight of 5,000 to 12,000 and were copolymerized at maleic acid anhydride to styrene ratios from 1 : 1 to 1 : 6.

4. The thermosetting epoxy resin composition in the form of a one-component system according to one or several of claims 1 through 3, **characterized in that** bisphenol A or bisphenol F and/or phenol novolac and/or cresol novolac and/or tetrabromobisphenol A and, optionally, tetraphenolethane are used as additional polyvalent phenols.

5. The thermosetting epoxy resin composition in the form of a one-component system according to one or several of claims 1 through 4, **characterized in that** acetone and/or methylethyl ketone and/or propylene glycol monomethyl ether acetate are used as organic solvents.

## Revendications

1. Composition de résine époxyde durcissable sous la forme d'un système à un seul composant, consistant en
. 20% en masse jusqu'à 75 % en masse de résines époxydes à faible poids moléculaire à base de
. bisphénol A avec des poids époxydes équivalents de 170 à 200 g/Equ et/ou de
. bisphénol F avec des poids époxydes équivalents époxydes de 158 à 200 g/Equ de
. tétrabromobisphénol A avec des poids équivalents époxydes de 330 à 500 g/Equ
et/ou de
. tétraphénoléthane avec des poids équivalents époxydes de 156 à 260 g/Equ avec une teneur globale en groupes α-glycole de 0,03 à 0,12 Equ/kgde résine globale,
rapportés à la matière solide totale
- 10 % en masse jusqu'à 75% en masse de copolymères - styrène - anhydride de l'acide maléique, avec un poids moléculaire moyen de 1400 à 50 000 rapportés à la matière solide totale, et éventuellement
- (0 % en masse) jusqu'à 50 % en masse de phénols multivalents, rapportés à la matière solide totale, qui éventuellement peuvent déjà être mis partiellement ou totalement en réaction préliminaire,
- dissous dans des solvants organiques.

2. Composition de résine époxyde durcissable sous la forme d'un système à un seul composant selon la revendication 1, **caractérisée en ce que** les résines époxydes à faible poids moléculaire présentent des poids équivalents époxydes pour le
bisphénol A de 180 à 190 g/Equ,
bisphénol F de 164 à 172 g/Equ,
tétrabromobisphénol A de 330 à 480 g/Equ et
tétraphénol - éthane de 190 à 240 g/Equ

3. Composition de résine époxyde durcissable sous la forme d'un système à composant unique selon la revendication 1 ou la revendication 2, **caractérisée en ce que** les copolymères - styrène - anhydride de l'acide maléique ont un poids moléculaire moyen de 5000 à 12 000 et ont été copolymérisés dans un rapport anhydride de l'acide maléique : styrène entre 1 : 1 jusqu'à 1 :6.

4. Composition de résine époxyde durcissable sous la forme d'un système à un seul composant selon une ou plusieurs des revendications 1 à 3, **caractérisée en ce qu'**en tant que phénols plurivalents utilisés de façon additionnelle, on emploie du bisphénol A et/ou du bisphénol F et/ou de la novolaque crésol et/ou du tétrabromobisphénol A et éventuellement du tétraphénol - éthane.

5. Composition de résine époxyde durcissable sous la forme d'un système à un seul composant selon une ou plusieurs des revendications 1 à 4, **caractérisée en ce qu'**en tant que solvants organiques , on emploie l'acétone et/ou la méthyléthylcétone et/ou du propylène-glycolmonométhylétheracétate.
